# EUROPEAN PATENT APPLICATION

(11) **EP 4 808 161 A2**
(43) Date of publication of application: **16.09.2026**
(21) Application number: 26195890.4
(22) Date of filing: 30.09.2022
(51) Int. Cl.: H04R 25/00

(54) **METHOD FOR CUSTOMIZING AUDIO SIGNAL PROCESSING OF A HEARING DEVICE AND HEARING DEVICE**

(62) Document number(s) of the earlier application(s) in accordance with Art. 76 EPC: 22199087.2 / 4 345 656
(71) Applicant: Sonova AG, 8712 Stäfa (CH)
(72) Inventor: Stenzel, Sebastian, 8712 Stäfa (CH); Krödel, Sebastian, 8712 Stäfa (CH)
(74) Representative: Rau, Schneck & Hübner Patentanwälte Rechtsanwälte PartGmbB

(57) **Abstract**

A hearing device (2) and a method for customizing audio signal processing of the hearing device (2) are described. The hearing device (2) is configured for audio signal processing of an input audio signal (I) to obtain an output audio signal (O), using an acoustic scene classification unit (12) for classifying the input audio signal (I) to belong to one or more acoustic scene classes from a set of acoustic scene classes. For customizing the audio signal processing, at least one audio signal sample of an acoustic environment is provided to an embedding neural network (14) of the acoustic scene classification unit (12). A sample embedding for each audio signal sample is determined using the embedding neural network (14). The audio signal processing is customized by retraining at least one classifier (15) of the acoustic scene classification unit (12) using the sample embeddings, thereby adding an acoustic scene class for the acoustic environment to the set of acoustic scene classes.

## Description

The inventive technology relates to a method for customizing, in particular personalizing, audio signal processing of a hearing device. The inventive technology further relates to a method for customized audio signal processing on a hearing device. The inventive technology further relates to a hearing device and a hearing device system.

### Background

Hearing devices and audio signal processing on hearing devices are known from the prior art. Known hearing devices can alter the audio signal processing based on a classification of the audio signal.

### Detailed description

It is an object of the present inventive technology to improve audio signal processing of a hearing device, in particular to allow for an improved customization of the audio signal processing.

This object is achieved by a method for customization, in particular personalization, of audio signal processing of a hearing device having steps specified in claim 1. A hearing device is provided. The hearing device is configured for audio signal processing of an input audio signal to obtain an output audio signal using an acoustic scene classification unit for classifying the input audio signal to belong to one or more acoustic scene classes. The acoustic scene classification unit comprises an embedding neural network for determining an embedding based on the input audio signal and at least one classifier for mapping the embedding onto one or more acoustic scene classes from a set of acoustic scene classes. For customizing the audio signal processing of the hearing device, at least one audio signal sample of an acoustic environment is provided to the embedding neural network. A sample embedding is determined for each audio signal sample of the acoustic environment using the embedding neural network of the acoustic scene classification unit. The audio signal processing is customized by re-training the at least one classifier using the sample embeddings, thereby adding an acoustic scene class for the acoustic environment to the set of acoustic scene classes.

The inventive method advantageously allows for adding additional, in particular personalized, acoustic scene classes, which are available for further audio signal processing. With that, the classification of acoustic scenes is flexibly customizable, in particular by adding acoustic environments, which an individual user experiences. A particular advantageous aspect of the inventive technology is that the added acoustic scene class is automatically detected by the acoustic scene classification unit after customization. Thus, the user has not to bother to manually activate personal settings when he encounters the same or a similar acoustic environment. After customization, the audio signal processing automatically recognizes the same or a similar acoustic environment without requiring additional user interaction. This enhances the hearing experience and increases the comfort for the user.

The addition of an acoustic scene class customizes, in particular personalizes, foremost the audio scene classification by allowing classifying an input audio signal into the newly added acoustic scene class. Further, the processing of the input audio signal to obtain the output audio signal preferably is dependent on the one or more acoustic scene class, to which the input audio signal belongs. Advantageously, the method also customizes how the output audio signal is obtained from the input audio signal. For example, steering parameters, in particular actuators and/or actuator settings, may be defined for the newly added acoustic scene class in order to meet user preferences upon processing input audio signals belonging to the respective acoustic environment.

Here and in the following, the term "acoustic environment" is to be understood as an acoustic environment, which the user of the hearing device encounters. Here and in the following, an acoustic environment may also be referred to as acoustic scene or specific acoustic scene.

The acoustic environment may be connected to a specific place, e.g. a church, a sport stadium, a railway station, a home of a user, public places or the like. The acoustic environment may also be specific for a certain type of activity, e.g. listening to music, being in conversation with one or more conversation partners, taking part in a public event or the like.

The hearing device user, who encounters a specific acoustic environment, may wish to customize the audio signal processing of the hearing device for that specific acoustic environment. This may, in particular, be the case because the user is not content with the outcome of the audio signal processing of the hearing device for that specific environment. Another reason may be that the user regularly encounters that acoustic environment, e.g. at home or in places and/or situations which he regularly encounters, so that the user wants to optimize the audio signal processing for that specific acoustic environment. The inventive technology allows the user to customize, in particular to personalize, the audio signal processing for such specific acoustic environment. For example, the user may initiate the customization process, e.g. by initiating the provision of the one or more audio signal samples. Additionally or alternatively, a customization of the audio signal processing may be initiated by the hearing device itself, e.g. if the outcome of the classification of the input audio signal is ambiguous so that the audio signal processing may not be reliable. Especially in this case, the definition of a new audio scene class may increase reliability and quality of the audio signal processing.

In the present context, an acoustic scene class may in particular be associated with one or more sound features of an acoustic environment, in particular with an acoustic environment as a whole. For example, an acoustic scene class may be associated with a certain kind of location (restaurant, train station, public places, ...) and/or specific locations (the church or restaurant, which the user regularly visits, the home of the user or the like). Additionally or alternatively, an acoustic scene class may be associated with a specific type of activity, like conversation in noisy places, conversation in quiet places, traffic noise, sports or the like. The added acoustic scene class may in particular resemble the acoustic environment of a specific location or activity which the user regularly attends to, e.g. his or her church, sports club, home or the like.

A particularly advantageous aspect of the inventive technology is the usage of the acoustic scene classification unit comprising the embedding neural network and at least one classifier. Such an acoustic scene classification unit may be referred to as a two-stage acoustic scene classification unit.

The embedding neural network determines an embedding of the input audio signal. The embedding is a vector representation of the input audio signal in an embedding space. The embedding advantageously reduces the complexity and/or dimensionality of the information contained in the input audio signal.

The embedding neural network may in particular be a deep neural network.

Preferably, the embedding neural network is trained to produce embeddings with maximized information content. The embedding neural network is in particular trained such that the distance between embeddings of similar acoustic scenes is minimized, whereas the distance between embeddings of different acoustic scenes is maximized. Such training can for example be executed using triplet losses. Information-rich content of the determined embeddings is particularly suitable for an efficient mapping of the embeddings onto different acoustic scene classes.

The at least one classifier does not have to process the input audio signal but maps the embedding produced by the embedding neural network onto the one or more corresponding acoustic scene classes. Thus, a less complex classifier structure may be used in respect to a classifier having to process the input audio signal. For example, the at least one classifier may comprise a classical multi-layer model, e.g. linear regression or support vector machines, and/or a small multi-layer perceptron model. Here and in the following, the term "small" is in particular to be understood in that the respective classifier has a size, in particular a number of layers and/or nodes, which is at least 10 times smaller than the size of the embedding neural network. For example, the size of the classifier can be up to 100 times smaller, in particular up to 1000 times smaller, than the size of embedding neural network. It is also possible that the size of the classifier is more than 1000 times smaller than that of the embedding neural network. For example, the classifier may be between 10 times and 1000 times, in particular between 10 times and 100 times, smaller than the embedding neural network.

Having a small complexity, the at least one classifier can be easily re-trained using a small amount of training data. In particular, efficient and simple training techniques, preferably few-shot training routines, may be used for re-training the at least one classifier. Re-training of the at least one classifier can be carried out in the field, in particular on the hearing device itself and/or on peripheral devices of a user and/or on a remote device. Preferably, re-training can be carried out during normal usage of the hearing device system by the user, in particular during audio signal processing by the hearing device. Particularly advantageously, a small number of sample embeddings is sufficient for re-training, allowing to re-train the at least one classifier using training data only obtained from the specific acoustic environment of a single user. Complex re-training methods which would require the collection of a huge amount of training data, which may not sufficiently gathered from a single user's acoustic environment, are not required. This allows for a true personalization of the audio signal processing based exclusively on user-specific training data.

In particular, the embedding neural network can be seen as a conditioning step for conditioning the input audio signal for facilitating the actual classification step. As such, the embedding neural network does advantageously not have to be modified, in particular re-trained, to achieve customization of the audio signal processing. Particularly preferable, the embedding neural network can be pre-trained offline and left unaltered upon the customization in field. This guarantees a simple and resource-efficient customization.

Re-training of the at least one classifier adds an additional acoustic scene class for the acoustic environment to the set of acoustic scene classes. For example, the re-trained classifier can be supplemented with an additional output, which is associated with the added acoustic scene class. It is also possible that the at least one classifier comprises one or more outputs which can be allocated and/or re-allocated to different added acoustic scene classes upon re-training.

A hearing device as in the context of the present inventive technology can be a wearable hearing device, in particular a wearable hearing aid, or an implantable hearing device, in particular an implantable hearing aid, or a hearing device with implants, in particular a hearing aid with implants. An implantable hearing aid is, for example, a middle-ear implant, a cochlear implant or brainstem implant. A wearable hearing device is, for example, a behind-the-ear device, an in-the-ear device, a spectacle hearing device or a bone conduction hearing device. In particular, the wearable hearing device can be a behind-the-ear hearing aid, an in-the-ear hearing aid, a spectacle hearing aid or a bone conduction hearing aid. A wearable hearing device can also be a suitable headphone, for example what is known as a hearable or smart headphone.

The hearing device can be part of a hearing device system. A hearing device system in the sense of the present inventive technology is a system of one or more devices being used by a user, in particular by a hearing impaired user, for enhancing his or her hearing experience. A hearing device system can comprise one or more hearing devices. For example, a hearing device system can comprise two hearing devices, in particular two hearing aids. The hearing devices can be considered to be wearable or implantable hearing devices associated with the left and right ear of a user, respectively.

Particular suitable hearing device systems can further comprise one or more peripheral devices. A peripheral device in the sense of the inventive technology is a device of the hearing device system which is not a hearing device, in particular not a hearing aid. In particular, the one or more peripheral devices may comprise a mobile device, in particular a smartwatch, a tablet and/or a smartphone. The peripheral device may be realized by components of the respective mobile device, in particular the respective smartwatch, tablet and/or smartphone. Particularly preferably, the standard hardware components of the mobile device are used for this purpose by virtue of an applicable piece of hearing device system software, for example in the form of an app, being installable and executable on the mobile device. Additionally or alternatively, the one or more peripheral devices may comprise a wireless microphone. Wireless microphones are assistive listening devices used by hearing impaired persons to improve understanding of speech in noise and over distance. Such wireless microphones include for example body-worn microphones or table microphones.

Different devices of the hearing device system, in particular different hearing devices and/or peripheral devices, may be connectable in a data-transmitting manner, in particular by a wireless data connection. The wireless data connection can be provided by a global wireless data connection network to which the components of the hearing device system can connect or can be provided by a local wireless data connection network which is established within the scope of the hearing device system. The local wireless data connection network can be connected to a global data connection network as the Internet e.g. via a landline or it can be entirely independent. A suitable wireless data connection may be a Bluetooth connection or similar protocols, such as for example Asha Bluetooth. Further exemplary wireless data connection are DM (digital modulation) transmitters, aptX LL and/or induction transmitters (NFMI). Also other wireless data connection technologies, e.g. broadband cellular networks, in particular 5G broadband cellular networks, and/or WIFI wireless network protocols, can be used.

The hearing device and/or a peripheral device of a hearing device system may be connectable to a remote device. The term "remote device" is to be understood as any device, which is not a part of the hearing device system. In particular, the remote device is positioned at a different location than the hearing device system. The remote device may preferable be connectable the hearing device and/or a peripheral device via a data connection, in particular via a remote data connection. The remote device, in particular the remote server, may in particular be connectable to the hearing device by a peripheral device of the hearing device system, in particular in form of a smartwatch, a smartphone and/or a tablet. The data connection between the remote device, in particular the remote server, and the hearing device may be established by any suitable data connection, in particular by a wireless data connection such as the wireless data connection described above with respect to the devices of the hearing device system. The data connection may in particular be established via the Internet.

In the present context, an audio signal, in particular an audio signal in form of the input audio signal and/or the output audio signal, may be any electrical signal, which carries acoustic information. In particular, an audio signal may comprise unprocessed or raw audio data, for example raw audio recordings or raw audio wave forms, and/or processed audio data, for example extracted audio features, compressed audio data, a spectrum, in particular a frequency spectrum, a cepstrum and/or cepstral coefficients and/or otherwise modified audio data. The audio signal can particularly be a signal representative of a sound detected locally at the user's position, e.g. generated by one or more electroacoustic transducers in the form of one or more microphones, in particular one or more electroacoustic transducers of an audio input unit of the hearing device. An audio signal may be in the form of an audio stream, in particular a continuous audio stream. For example, the audio input unit may obtain the input audio signal by receiving an audio stream provided to the audio input unit. For example, an input signal received by the audio input unit may be an unprocessed recording of ambient sound, e.g. in the form of an audio stream received wirelessly from a peripheral device and/or a remote device which may detect the sound at a remote position distant from the user. The audio signals in the context of the inventive technology can also have different characteristics, format and purposes. In particular, different kinds of audio signals, e.g. the input audio signal and/or the output audio signal, may differ in characteristics and/or format.

The hearing device is configured for audio signal processing the input audio signal to obtain the output audio signal, in particular in dependence of the one or more acoustic scene classes, to which the input audio signal belongs. For example, the output audio signal may be obtained, in particular generated, from the input audio signal by a conversion unit. Preferably, the hearing device may be configured for audio signal processing using the acoustic scene classification unit and the conversion unit.

Obtaining the output audio signal from the input audio signal is in particular to be understood as converting the input audio signal into at least parts of the output audio signal, e.g. by the conversion unit. For example, the conversion unit may be configured for modifying and/or synthesizing the input audio signal to obtain the output audio signal. The conversion of the input audio signal may in particular comprise sound enhancement, which can comprise speech enhancement and/or noise cancellation. Sound enhancement may in particular improve intelligibility or ability of a listener to hear a particular sound. For example, speech enhancement refers to improving the quality of speech in an audio signal so that the listener can better understand speech.

The audio signal processing of the hearing device uses the acoustic scene classification unit and optionally a conversion unit. The acoustic scene classification unit and/or the conversion unit may be comprised by the hearing device itself. It is also possible that the acoustic scene classification unit and/or the conversion unit are comprised by another device of the hearing device system, e.g. by a peripheral device. For example, the audio scene classification unit may be comprised by and executed on a peripheral device, in particular on a smartphone. Audio scene classification is less crucial on latency than obtaining the output audio signal from the input audio signal. The audio scene classification can thus be outsourced to another device without negatively affecting the latency of obtaining the output audio signal. Particularly preferable, the conversion unit and the acoustic scene classification unit are comprised by and executed by the hearing device. At least during normal usage, the hearing device may work as a standalone device, which is not dependent on peripheral devices.

The acoustic scene classification unit and the conversion unit can be part of, in particular can be run by, a common computing device, in particular a computing device of the hearing device. It is also possible that the acoustic scene classification unit and the conversion unit are part of, in particular are executed by, different computing devices, in particular by computing devices belonging to different devices of a hearing devices system.

A computing device in the present context, in particular computing device of the hearing device and/or the peripheral device, may comprise a processing unit. The processing unit may comprise a general processor adapted for performing arbitrary operations, e.g. a central processing unit (CPU). The computing device may alternatively or additionally comprise a processor specialized on the execution of a neural network, in particular the embedding neural network. Preferably, a computing device may comprise an AI chip for executing a neural network, in particular the embedding neural network. AI chips can execute neural networks efficiently. However, a dedicated AI chip is not necessary for the execution of a neural network. The computing device may execute one or more audio signal processing routines stored on a data storage, in particular on a data storage of the hearing device and/or the peripheral device.

The computing device may further comprise a data storage, in particular in form of a computer-readable medium. The computer-readable medium may be a non-transitory computer-readable medium, in particular a data memory. Exemplary data memories include, but are not limited to, dynamic random access memories (DRAM), static random access memories (SRAM), random access memories (RAM), solid state drives (SSD), hard drives and/or flash drives.

Obtaining the output audio signal, in particular converting of the input audio signal may be executed using one or more audio processing routines. The audio processing routines may comprise traditional audio processing routines and/or neural networks for audio signal processing. In the context of the present inventive technology, traditional audio signal processing and traditional audio signal processing routines are to be understood as an audio signal processing and audio signal processing routines which do not comprise methods of machine learning, in particular which do not comprise neural networks, but can, e.g., include digital audio processing. Traditional audio signal processing routines include, but are not limited to, linear signal processing, such as, for example, Wiener filters and/or beamforming.

According to a preferred aspect of the inventive technology, the acoustic scene classification unit comprises at least two classifiers, of which at least one classifier is not subject to retraining. Upon customization of the audio signal processing, at least one of the classifiers is not re-trained. This has the advantage that the re-training does not have any effect, in particular not any detrimental effect, on the classification of that classifier. The classifier, which is not subject to re-training, may in the following also be referred to as default classifier. The default classifier may, in particular, be used for mapping the embeddings onto a plurality of default or pre-defined acoustic scene classes. The determination of the default acoustic scene classes is not altered by the customization. The method is reliable and secure. In particular, the default classifier can provide a factory setting, to which the audio signal processing can be reset, if required.

The at least one classifier which is subject to re-training may also be referred to as customized classifier. The customized classifier can comprise outputs to each of which one to be added acoustic scene class can be assigned.

Preferably, the at least two classifiers, in particular the at least one default classifier and the at least one customized classifier, can be executed in parallel during audio signal processing of the hearing device. In particular, the embedding of the input audio signal may be provided to all of the at least two classifiers. Each classifier maps the sample embedding on the respective acoustic scene classes, in particular pre-defined acoustic scene classes on the one hand and personalized acoustic scene classes on the other hand. Depending on the proportions of the respective mapping, the acoustic scene classification unit can determine the one or more corresponding acoustic scene classes for the input audio signal. For example, when the proportion of the customized classifier rises above a certain threshold, the outcome of the default classifier may be disregarded.

According to a preferred aspect of the inventive technology, the provision of the one or more audio signal samples is initiated by a user of the hearing device. In particular, the user can choose the acoustic environment, for which he wants to customize the audio signal processing. This allows for a real personalization of the audio signal processing.

For example, the user may initiate the customization by a user input, in particular using a user interface of the hearing device and/or a peripheral device. For example, the user may add a new acoustic scene class to an inventory of personalized acoustic scene classes. Based on the creation of the new acoustic scene class, the further customization process can be initiated.

According to a preferred aspect of the inventive technology, the number of provided audio signal samples is between 1 and 1000, in particular between 10 and 1000, in particular between 100 and 1000. The number of provided audio signal samples and with that the number of sample embeddings, is sufficient to retrain the at least one classifier, in particular by few-shot training techniques. This number of audio signal samples can be easily obtained by the hearing device and/or by a peripheral device in the specific acoustic environment the user is in. Harvesting additional training data from other sources is not required. In some embodiments, the number of provided audio signal samples may in particular be below 100, e.g. between 1 and 99, in particular between 10 and 99. This allows for a particularly efficient retraining of the at least one classifier.

The audio signal samples are preferably provided by recording sound samples using the hearing device and/or peripheral device, in particular using an audio input unit of the hearing device. For example, sound samples of an acoustic environment can be recorded by the hearing device and/or peripheral device to provide the audio signal samples. Audio samples being recorded by the hearing device may be directly provided to an embedding neural network of the hearing device for determining the respective sample embeddings. Audio samples being recorded by a peripheral device may be directly provided to an embedding neural network of the peripheral device for determining the respective sample embeddings. Audio signal samples being recorded by a peripheral device may be transmitted to the hearing device for being provided to an embedding neural network of the hearing devices. Audio signal samples being recorded by the hearing device may be transmitted to a peripheral device for being provided to an embedding neural network of the peripheral device.

According to a preferred aspect of the inventive technology, one or more steering parameters for steering the audio signal processing in dependence of the acoustic scene class are determined. The one or more steering parameters may in particular steer the conversion unit for obtaining the output audio signal from the input audio signal. The one or more steering parameters can be assigned to the added acoustic scene class. When the audio signal classification unit classifies the input audio signal to belong to the added acoustic scene class, the associated one or more steering parameters can be used for steering the conversion unit. The steering parameters may in particular activate and/or modify one or more actuators, which govern the processing of the input audio signal. Exemplary actuators are algorithms and/or features that process audio in the hearing device. These actuators can run individually or in an ensemble to result in the best possible audio enhancement. Examples of such actuators are: Gain models, in particular gain and/or wide dynamic range compression, frequency compression, noise canceller (Wiener filter), active noise cancelling (ANC), beamforming, soft speech enhancement, feedback cancelling, wind noise cancelling etc. The one or more steering parameters may, for example, activate suitable actuators for modifying the input audio signal in accordance with the respective acoustic scene class. For example, based on the one or more steering parameters, one or more actuators may be chosen from a plurality of possible actuators. Additionally or alternatively, the at least one steering parameter may modify one or more actuators for processing the input audio signal in accordance with the respective acoustic scene class. For example, based on the at least one steering parameter, the settings of one or more actuators may be modified, in particular adjusted. For example, the aggressiveness of one or more actuators may be adjusted based on the one or more steering parameters.

The one or more steering parameters may directly be associated with an individual actuator and/or its respective settings. For example, a steering parameter may directly correspond to the aggressiveness setting of a noise canceller. This allows for a precise and detailed customization of the audio signal processing. Additionally or alternatively, one or more steering parameters may be meta parameters, which indirectly influence one or more actuators and/or their respective settings. For example, a steering parameter may concern the clarity of the output audio signal. Based on the determined "clarity" parameter, respective actuators and/or actuator settings may be modified to achieve a corresponding clarity in the output audio signal. For example, based on meta parameters, a steering in accordance with the user's subjective preferences for auditory sensation, e.g. "clarity" vs. "comfort", is possible. This allows for a particularly intuitive and user-friendly customization.

The one or more steering parameters may be determined by the user. The user may in particular use a user interface of the hearing device and/or of a peripheral device, to set the steering parameters. For example, the user may change pre-set steering parameters, in particular actuators and/or actuator settings, to modify how the output audio signal is obtained, in particular generated from the input audio signal, until he is content with the result. Additionally or alternatively, the one or more steering parameters may be determined automatically, in particular fully automatically. For example, the sample embeddings may be compared with previously recorded and stored sample embeddings of other acoustic environments. When a distance of the newly recorded sample embeddings to previously recorded sample embeddings is small, corresponding steering parameters can be determined. Particularly preferable, automatically determined steering parameters can be proposed to the user who can then fine tune the steering parameters starting from the proposal.

For automatically determining one or more steering parameters, it may be beneficial to transfer the sample embeddings to a remote server, which stores sample embeddings of predefined classes and of personalized classes of a plurality of users. The remote device can compare the determined sample embeddings with stored sample embeddings to identify closest neighboring sample embeddings and to suggest corresponding steering parameters. In this regard, it is particularly beneficial to use sample embeddings, as these do not contain any sensitive data, such as speech signals or the like.

According to a preferred aspect of the inventive technology, the re-training of the at least one classifier is executed externally of the hearing device. Preferably, the re-training of the at least one classifier can be done on a peripheral device of the hearing device system and/or on a remote device, in particular a remote server, for example a cloud service. Executing the re-training process externally of the hearing device allows to use higher computational capabilities of peripheral and/or remote devices. The audio signal processing on the hearing device is not constrained by the re-training process. This improves customization during usage of the hearing device.

According to a preferred aspect of the inventive technology, the determined sample embeddings are added to an embedding database, in which sample embeddings of each of the audio scene classes in the set of acoustic scene classes are stored. The stored sample embeddings can be used for later reference, in particular in later re-training processes. Further, plausibility checks can be performed on the stored sample embeddings, in particular by comparing newly determined sample embeddings with already stored sample embeddings.

The embedding database can be comprised by the hearing device and/or by a peripheral device and/or by a remote device. Knowledge from the embedding database may advantageously be used to avoid detrimental effects on existing audio scene classes upon re-training, in particular when a distance of the newly determined sample embedding to prior existing sample embeddings in the embedding space is too small.

Storing the sample embeddings instead of audio signal samples needs is in particular advantageous with respect to privacy and required resources, such as, e.g., memory space. The sample embeddings do not contain any sensible data.

According a preferred aspect of the inventive technology, the determined sample embeddings are compared to sample embeddings of existing acoustic scene classes prior to re-training the at least one classifier. The comparison with prior existing sample embeddings, in particular with sample embeddings already stored in an embedding database, allows for plausibility checks of the customization prior to re-training. For example, the distance of the newly determined sample embedding is too small from sample embeddings corresponding to one or more already existing audio scene classes, a re-training for a new audio scene class may lead to ambiguous audio scene classes, which may weaken the classification scheme. The hearing device and/or peripheral device may output a warning to the user whether he nevertheless wishes to use the sample embeddings for customization.

Additionally or alternatively, plausibility checks may be performed on the at least one classifier after retraining. For example, the prior determined sample embeddings, in particular sample embeddings stored in the embedding database, may be fed through the at least one re-trained classifier. Doing so, the accuracy of the at least one re-trained classifier can be evaluated. It is in particular possible to store two sets of sample embeddings in the embedding database. One set of sample embeddings may be used for re-training the at least one classifier, the other set may be used for testing the re-trained at least one classifier.

Additionally or alternatively, plausibility checks may be performed on at least one steering parameter associated with the newly added acoustic scene class, in particular respective actuator settings. For example, custom actuator settings may be compared with those corresponding to the at least one steering parameter. This way, a change in actuator settings and audio signal processing may be evaluated, e.g. to detect possible detuning of the audio signal processing. For example, the activation of the noise canceller at full strength while the default classifier classifiers "calm environment", may hint to deficient customization settings.

According to a preferred aspect of the inventive technology, the added acoustic scene class is merged with an existing acoustic scene class, in particular a previously added acoustic scene class, if a distance of the respective sample embeddings in the embedding space is below a pre-defined threshold. Merging the acoustic scene classes has the advantage that an ambiguous classification of similar acoustic scene classes is avoided. The newly determined sample embeddings may, for example, be assigned to the already existing acoustic scene class. The at least one classifier may be re-trained with the newly determined sample embeddings, thereby refining the classification of the merged acoustic scene class.

It is a further object of the present inventive technology to improve the customized, in particular personalized, audio signal processing on a hearing device.

This object is achieved by a method with the steps of claim 10. A hearing device is provided wherein the hearing device is configured for audio signal processing using an acoustic scene classification unit and a conversion unit as described above. The audio signal processing of the hearing device is customized, in particular personalized, as described above. An input audio signal is processed by the customized audio signal processing of the hearing device. Processing an input audio signal with the customized audio signal processing, automatically detects the acoustic environment, for which an additional acoustic scene class has been added. If the user re-encounters the same or a similar acoustic environment, the audio signal processing can automatically be adjusted to that acoustic environment. The user does not have to manually activate respective processing parameters. Further, it is not necessary to alter the processing for pre-existing audio scene classes, which may have detrimental effects on the audio signal processing in other circumstances. The method of customized audio signal processing provides the same advantages as the method for customization described above.

It is a further object of the inventive technology to improve a hearing device, in particular to provide a hearing device which can be easily customized, in particular personalized.

This object is achieved by a hearing device with the features of claim 11.

The hearing device comprises an audio input unit for obtaining an input audio signal, an acoustic scene classification unit for classifying the input audio signal to be belong to one or more acoustic scene classes, a conversion unit for obtaining an output audio signal from the input audio signal in dependence of the one or more acoustic scene classes, to which the input audio signal belongs, and an audio output unit for outputting the output audio signal. The acoustic scene classification unit comprises an embedding neural network for determining an embedding based on the input audio signal, and at least one classifier for mapping the embedding onto one or more acoustic scene classes. This two-stage acoustic scene classification unit allows for a reliable classification of the input audio signal and, at the same time, for easy and flexible customization of the available acoustic scene classes, in particular by adding an acoustic scene class. For example, the above-discussed customization method may be used for customizing, in particular personalizing the hearing device. The hearing device may comprise one or more of the optional features described with regard to the methods above.

An audio input unit in the present context is configured to obtain the input audio signal. Obtaining the input audio signal may comprise receiving an input signal by the audio input unit. For example, the input audio signal may correspond to an input signal received by the audio input unit. The audio input unit may for example be an interface for the incoming input signal, in particular for an incoming audio stream. In incoming audio stream may already have the correct format. The audio input unit may also be configured to convert an incoming audio stream into the input audio signal, e.g. by changing its format and/or by transformation, in particular by a suitable Fourier transformation. Obtaining the input audio signal may further comprise to provide, in particular to generate, the input audio signal based on the received input signal. For example, the received input signal can be an acoustic signal, i.e. a sound, which is converted into the input audio signal. For this purpose, the audio input unit may be formed by or comprise one or more electroacoustic transducers, e.g. one or more microphones. The received input signal can also be an audio signal, e.g. in the form of an audio stream, in which case the audio input unit is configured to provide the input audio signal based on the received audio stream. The received audio stream may be provided from another hearing device, a peripheral device and/or a remote device, e.g., a table microphone device, or any other remote device constituting a streaming source or a device connected to a streaming source, including but not limited to a mobile phone, laptop, or television.

An audio output unit in the present context is configured to output the output audio signal. For example, the audio output unit may transfer or stream the output audio signal to another device, e.g. a peripheral device and/or a remote device. Outputting the output audio signal may comprise providing, in particular generating, an output signal based on an output audio signal. The output signal can be an output sound based on the output audio signal. In this case, the audio output unit may be formed by or comprise one or more electroacoustic transducers, in particular one or more speakers and/or so-called receivers. The output signal may also be an audio signal, e.g. in the form of an output audio stream and/or in the form of an electric output signal. An electric output signal may for example be used to drive an electrode of an implant for, e.g. directly stimulating neural pathways or nerves related to the hearing of a user.

According to a preferred aspect of the invention, the at least one classifier comprises a plurality of outputs, wherein each output corresponds to one acoustic scene class and wherein the acoustic scene class of at least one of the outputs is modifiable, in particular replaced, based on user preferences. For example, some of the outputs may be assigned to pre-defined acoustic scene classes, while at least one other output may initially be not assigned to an acoustic scene class. Upon re-training of the at least one classifier, the added acoustic scene class may be assigned to the one or more unassigned outputs. Further, it is possible that the acoustic scene class, which is assigned to at least one output, may be replaced by another acoustic scene class. For example, the at least one classifier may provide a plurality of initially unassigned outputs, to which the personal acoustic scene classes of the user may be assigned upon customization. If each output is assigned to an acoustic scene class, further addition of an acoustic scene class may result in replacement of a previously added acoustic scene class. Preferably, the user may choose which of the previously added acoustic scene classes may be replaced.

According to a preferred aspect of the inventive technology, the acoustic scene classification unit comprises at least two classifiers, wherein one of the classifiers is adapted to be re-trained based on user preferences without changing the at least one other classifier. The unchanged classifier can serve as a default classifier or factory reset. The user can customize the at least one classifier without detrimental effects on pre-defined acoustic scene classes being assigned to the outputs of the default classifier. In particular, only one of the classifiers is used for the customization, in particular personalization of the audio signal processing.

It is a further object of the inventive technology to improve a hearing device system, in particular to provide a hearing device system allowing for customized audio signal processing.

This object is achieved by a hearing device system as claimed in claim 14. The hearing device system comprises a hearing device as described above. The hearing device system further comprises a user interface for initiating the provision of one or more audio signal samples and/or for receiving one or more steering parameters. The user interface may be realized in the hearing device, e.g. by a sensor or button which senses a touch of the user. Preferably, the user interface may be comprised by a peripheral device, in particular by a smartphone, smartwatch and/or tablet. The user interface may be provided by an application software running on a smartphone, smartwatch and/or tablet of the user. When the user wishes to initiate the customization process and/or to determine steering parameters, he may open up the app and use a respective input possibility.

Preferably, the hearing device system comprises a peripheral device, on which parts of the customization process, in particular a re-training of the at least one classifier, may be performed.

According to a preferred aspect of the inventive technology, the hearing device system comprises an embedding database, in which sample embeddings of each of the acoustic scene classes in the set of acoustic scene classes are stored. The embedding database may be part of the hearing device and/or a peripheral device. The embedding database provides the advantages described with regard to the customization method above.

Further details, features and advantages of the inventive technology are obtained from the description of exemplary embodiments with reference to the figures, in which:
- Fig. 1: Shows a schematic depiction of a hearing device system comprising a hearing device and a peripheral device,
- Fig. 2: shows a schematic depiction of an acoustic scene classification unit of the hearing device system of Fig. 1,
- Fig. 3: shows a schematic depiction of an exemplary architecture of an embedding neural network being part of the acoustic scene classification unit of Fig. 2,
- Fig. 4: shows a schematic depiction of an exemplary classifier being part of the acoustic scene classification unit of Fig. 2,
- Fig. 5: shows a schematic depiction of a method for customizing the audio signal processing of the hearing device in Fig. 1,
- Fig. 6: shows a schematic depiction of a retraining step of the method for customization shown in Fig. 5, and
- Fig. 7: shows a schematic depiction of a further embodiment of an acoustic scene classification unit.

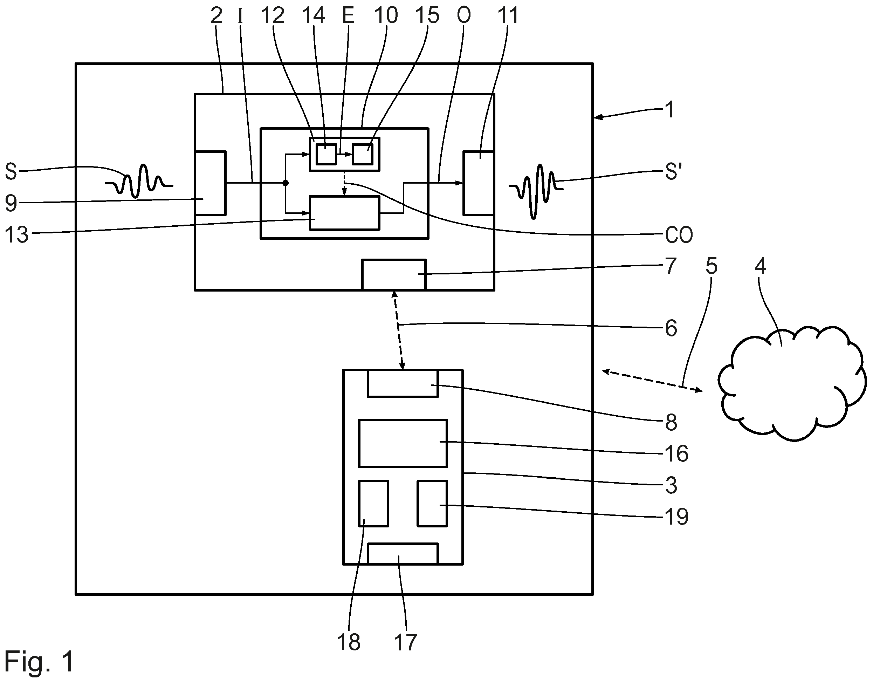

Fig. 1 schematically depicts a hearing device system 1 comprising a hearing device 2 and a peripheral device 3. The hearing device system 1 may be connectable to a remote device 4 via remote data connection 5. Remote device 4 may be a remote server. Via remote device 4, a cloud service may be established. It is in particular possible to connect different hearing device systems 1 of different users to remote device 4.

In the shown embodiment, the hearing device 2 of the hearing device system 1 is a hearing aid. In other embodiment, the hearing device system may comprise more than one hearing device 2.

For example, the hearing device system may comprise two hearing aids to be worn in the left and right ear of a user U of the hearing device system 1, respectively.

The peripheral device 3 of the hearing device system 1 is a smartphone. In other embodiments, the peripheral device 3 may be another portable device, for example a mobile device, in particular a tablet, smartwatch and/or smartphone. In yet another embodiment, the peripheral device 3 may be a wireless microphone. It is also possible, that the hearing device system 1 may comprise a plurality of peripheral devices, e.g. a mobile device and a wireless microphone. In yet other embodiments, the hearing device system 1 may not comprise any peripheral device.

The hearing device 2 is connected to the peripheral device 3 via wireless data connection 6. Any suitable protocol can be used for establishing the wireless data connection 6. For example, the wireless data connection 6 may be a Bluetooth connection or may use similar protocols such as for example Asha Bluetooth. Further exemplary wireless data connections are FM transmitters, aptX LL and/or induction transmitters (NFMI) such as the Roger protocol. Similar wireless data connections may be used in other embodiments to connect further devices, in particular further hearing devices and/or peripheral devices of the hearing device system with each other.

For establishing the wireless data connection 6, the hearing device 2 comprises a data connection interface 7. The peripheral device 3 may comprise a data connection interface 8. Using the wireless data connection 6, the hearing device 2 and the peripheral device 3 can exchange data, in particular regarding user preferences and/or updated processing routines.

The hearing device 2 comprises an audio input unit 9 for obtaining an input audio signal I. The hearing device 2 further comprises a computing device 10 for audio signal processing the input audio signal I for obtaining an output audio signal O. The hearing device 2 further comprises an audio output unit 11 for outputting the output audio signal O.

In the present embodiment, the audio input unit 9 comprises an electroacoustic transducer, especially in the form a microphone. The audio input unit 9 receives ambient sound S and provides a corresponding input audio signal I for audio signal processing to the computing device 10. The computing device 10 performs audio signal processing on the respective input audio signal I, thereby obtaining the output audio signal O. The output audio signal O is provided to the audio output unit 11 which outputs the output audio signal O. In the present embodiment, the audio output unit 11 comprises an electric transducer, in particular in form of a receiver. The audio output unit 11 provides a corresponding output sound S' to the user of the hearing device system 1 via the receiver.

For example, the input audio signal I may be raw audio data which is obtained by the audio input unit 9 by receiving the ambient sound S. The input audio signal I may further comprise processed audio data, e.g. compressed audio data and/or a spectrum obtained from the ambient sound S.

It has to be noted that in alternative embodiments, the audio input device 9 may comprise, in addition to or instead of the microphones, an interface that allows for receiving audio signals, e.g., in the form of an audio stream. For example, an audio stream may be provided to the audio input unit by an external microphone. Furthermore, the audio output unit 11 can comprise, in addition to or in instead of the receivers, an interface that allows for outputting electric audio signals, e.g., in the form of an audio stream or in the form of an electrical signal that can be used for driving an electrode of a hearing aid implant.

The computing device 10 of the hearing device 2 is not depicted in detail. It comprises an acoustic scene classification unit 12 and a conversion unit 13. The acoustic scene classification unit 12 classifies the input audio signal I to belong to one or more acoustic scene classes Cₙ. A result of this classification, e.g. the identified one or more acoustic scene classes Cₙ, is provided by the acoustic scene classification unit in form of a classification output CO. The acoustic scene classification unit 12 comprises an embedding neural network 14 and at least one classifier 15 which work in a two-stage way to perform the classification, as will be described in more detail below.

The conversion unit 13 obtains, in particular generates, the output audio signal O from the input audio signal I. The conversion unit 13 is configured to obtain the output audio signal O in dependence of the one or more acoustic scene classes Cₙ, to which the input audio signal I belongs. To this end, the conversion unit 13 receives the input audio signal I as well as the classification output CO as an input. The conversion unit 13 processes the input audio signal I, thereby converting, e.g. modifying and/or synthesizing, the input audio signal to obtain the output audio signal O. Depending on the identified one or more audio scene classes Cₙ, the conversion of the input audio signal may vary. In the shown embodiment, each audio scene class is associated with a respective set of one or more steering parameters P which steer the processing of the conversion unit 13. For example, the steering parameters P may activate and/or modify one or more actuators, which govern how the input audio signal I is processed, in particular converted, into the output audio signal O.

Different audio scene classes Cₙ may be associated with different acoustic environments. Different audio scene classes Cₙ may for example relate to specific types of sounds, like speech in noisy surroundings, e.g. in a restaurant and/or on public places, speech in silent surroundings, e.g. at home, and/or other ambient sounds, e.g. traffic noise. Different audio scene classes Cₙ may alternatively or additionally relate to specific surroundings or places, like railway station, churches, theaters or the like. The input audio signal I may belong to one or more of these different audio scene classes Cₙ. For example, the user may be in a conversation with another person in a railway station. The input audio signal I may than, for example, belong to the audio scene classes Cₙ "speech in noisy surroundings" and "railway station". Depending on the respective audio scene classes, a different kind of processing of the input audio signal I may be required to provide a satisfying hearing experience to the user of the hearing device system 1. For example, if the input audio signal is classified as speech in noisy surroundings, speech enhancement with a higher suppression of surrounding noise may be advantageous. On the other hand, if traffic noise is detected, it may be necessary for the user's safety that the traffic noise is not completely filtered from the input audio signal I when determining the output audio signal O.

In the shown embodiment, the acoustic scene classification unit 12 and the conversion unit 13 are part of a common computing device 10 of the hearing device 2. In this sense, the acoustic scene classification unit 12 and the conversion unit 13 may be regarded as functional units being implemented in common computing device 10, e.g. as respective software which is run on the computing device 10. In other embodiments, the audio scene classification unit 12 and the conversion unit 13 may be independent of each other, in particular may be comprised respective computing devices. It is even possible to distribute the audio scene classification unit 12 and the conversion unit 13 on different devices, e.g. on different hearing devices of a hearing device system and/or on a hearing device and a peripheral device of the hearing device system, respectively. In an exemplary embodiment, the audio scene classification unit may be comprised by a peripheral device. Classifying the audio scene may be less crucial on latency so that executing the respective classification on a peripheral does not compromise the hearing experience of the user. At the same time, the output audio signal O may be determined with low latency directly on the hearing device.

An exemplary computing device 10 may comprise a processor, in particular comprising an AI chip, and a main memory. Each computing device may further comprise a data memory for storing different audio signal processing algorithms, which, when executed by the processor perform the audio signal processing, in particular the classification and/or conversion of the input audio signal I. The data memory preferably comprises different audio signal processing algorithms and/or different sets of steering parameters for processing different kinds of audio signals.

The peripheral device 3 is a smartphone being equipped with a special application software, which allows the user to interact with the hearing device 2, in particular for customizing the audio signal processing of the hearing device 2. The peripheral device 3 comprises a user interface 16, in particular in the form of a touchscreen. The user interface 16 allows displaying information to the user in form of a user output. The user interface 16 can receive user input, for example in form of a touch input.

The peripheral device 3 comprises a remote data interface 17. The remote data interface 17 is configured to transmit data to and receive data from devices outside of the hearing device system 1. The remote data interface 17 is for example data interface connecting to the internet. The remote data interface 17 preferably can connect to the internet via Wi-Fi and/or mobile data protocols, such as 3G, 4G and/or 5G broadband cellular networks.

The peripheral device 3 comprises a data storage 18 and a processing unit 19. For example, the application software for realizing the remote device 3 may be stored on the data storage 18 and executed on the processing unit 19.

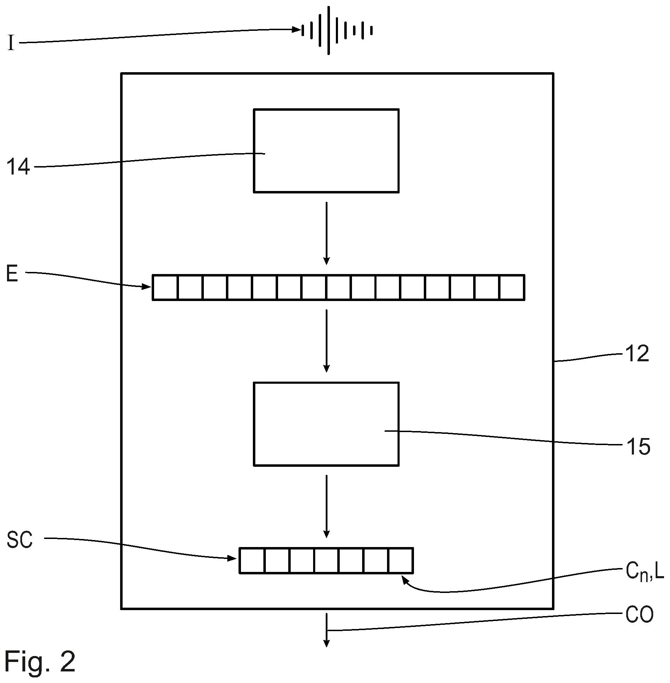

With regard to Fig. 2, the acoustic scene classification by the acoustic scene classification unit 12 is described in greater detail. The acoustic scene classification unit 12 comprises the embedding neural network 14 and at least one classifier 15. In the shown embodiment, only one classifier 15 is shown for simplicity.

The acoustic scene classification unit 12 receives the input audio signal I as an input. The input audio signal I is inputted in the embedding neural network 14. The embedding neural network 14 determines an embedding E based on the input audio signal I. The embedding E is a vector representation of the input audio signal I in an embedding space. In other words, the embedding neural network 14 associates the input audio signal with a point in an embedding space. This reduces the dimensionality of the problem and allows representing different input audio signals I as different vectors in the embedding space. In consequence, the embeddings E can be used to determine different properties of the input audio signals depending on the position in the embedding space and/or the distance to an embedding E of another input audio signal I.

The dimensionality of the embedding space can be chosen as required. For example, the embedding space may be 10 to 1000 dimensional.

The embedding neural network 14 is trained such that the distance between embeddings E of similar acoustic scenes is minimized, while the distance between embeddings of differing acoustic scenes is maximized. Hence, the embedding E contains a maximized information content.

The embedding E is provided to the classifier 15. The classifier 15 maps the embedding E to a set SC of the acoustic scene classes Cₙ, wherein n = 1, 2, ... indicates different acoustic scene classes. The classifier 15 thereby identifies one or more acoustic scene classes Cₙ to which the input audio signal I belongs. Information on the identified respective acoustic scene classes Cₙ is outputted as classification output CO.

The two-stage classification process, in particular using an embedding neural network 14, has the advantage that the one or more classifier 15 can be less complex than classifiers usually used for acoustic scene classification. This in particular allows to use simple training techniques to re-train and modify the one or more classifiers 15. Re-training the one or more classifiers 15 allows to customize the acoustic scene classification and with that the audio signal processing of the hearing device 2 in a simple and efficient manner. In particular, the one or more classifiers 15 can be re-trained in the field, e.g. directly on the hearing device 2 and/or the peripheral device 3.

In particular, the customization can be done by only re-training the one or more classifiers 15, while the embedding neural network remains unchanged.

For example, the one or more classifier 15 can be a linear classifier. For example, the one or more classifier may comprise a classical multi-layer module, e.g. linear regression or support vector machines. Additionally and/or alternatively, the one or more classifier may comprise a multi-layer perceptron.

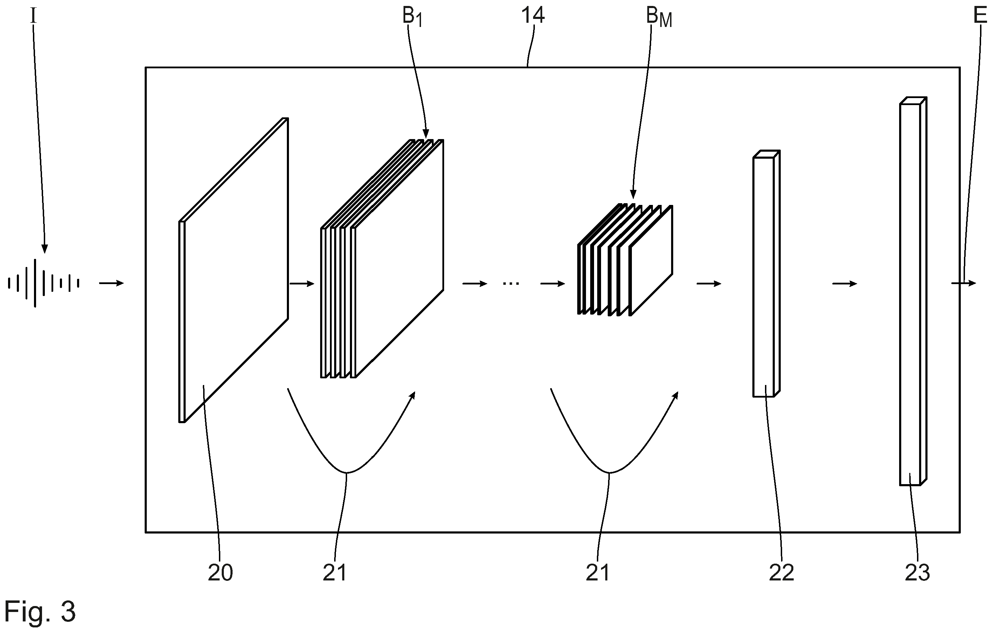

With regard to Fig. 3, an exemplary configuration of the embedding neural network 14 is described. The embedding neural network 14 is a deep neural network, which receives the input audio signal I as an input. As previously described, the input audio signal I may be raw audio data or processed audio data, in particular a time-frequency domain representation of the received ambient sound. Particularly suitable is an input audio signal I in form of a Mel spectrogram.

The embedding neural network 14 comprises an input layer 20 for receiving the input audio signal I, in particular in form of a discreet time-frequency representation of the received ambient sound S.

The embedding neural network comprises a series of M convolutional blocks Bₘ (m = 1, ..., M). In Fig. 3, only the first convolutional block B₁ and the last convolutional block Bₙ are shown for simplicity. The convolutional blocks Bₘ are residual blocks with skip connections 21 and Rectified Linear Unit (ReLU) activation functions. For example, the number of blocks M may be between 2 and 10.

After the series of M convolutional blocks Bₘ, the embedding neural network 14 has denes or recurrent units for outputting the embedding E. In the embodiment of Fig. 3, there is a flattening layer 22 for converting the data in a one-dimensional array. After the flattening layer 22, follows a dense layer 23 comprising the embedding E. The dense layer 23 serves as an output layer for outputting the embedding E.

As mentioned above, the embedding neural network is trained for maximized information content. That means that the distance between embeddings of similar acoustic scenes is minimized, while the distance between embeddings of differing acoustic scenes is maximized. For example, the embedding neural network 14 may be trained using triplet losses. A particularly suitable training method is the audiovisual correspondence approach, as for example described by J. Cramer et al., "Look, listen, and learn more: Design choices for deep audio embeddings", 2019 IEEE International Conference on Acoustics, Speech, and Signal Processing, ICASSP 2019, pp. 3852 - 3856. The training is preferably performed offline. The embedding neural network is preferably not changed once being used in the hearing device.

Possible training data for the embedding neural network 14 is comprised of audio data from various public and/or commercial sources, e.g. from YouTube. The labelling of the audio data may be performed based on metadata available for the respective audio source.

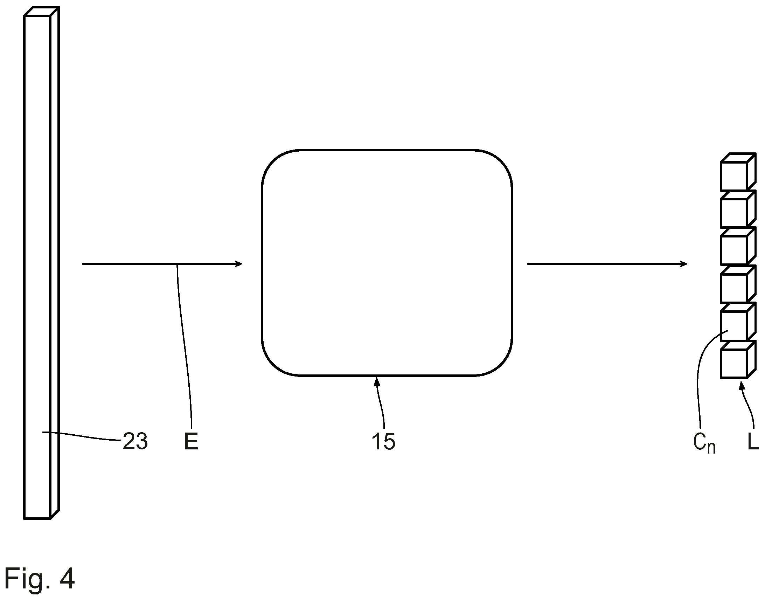

With respect to Fig. 4, an exemplary configuration of a classifier 15 is described. The classifier 15 uses the embedding E as an input. As shown in Fig. 4, the embedding E can be directly fed from the dense layer 23 of the embedding neural network 14 into the classifier 15. The classifier 15 uses the information-rich representation of the embedding E as a basis to predict the one or more acoustic scene classes Cₙ to which the input audio signal belongs. The classifier 15 may be comprised of a multilayer perceptron (MLP) model or a classical multilayer model, e.g. linear regression or support vector machine. The classifier 15 outputs a multitude of labels L , wherein each label corresponds to one of the acoustic scene classes Cₙ of the set CO. Depending on the proportions of the labels L, the one or more acoustic scene classes Cₙ, to which the input audio signal I belongs, can be identified.

Due to the simple structure of the at least one classifier 15, the classifier 15 can be trained and re-trained with little effort. In particular, simple training algorithms are sufficient to train and/or re-train the at least one classifier 15. This, in particular, allows re-training of the classifier 15 in the field, preferably during usage of the hearing device system 1, in particular its hearing device 2, for audio signal processing.

Advantageously, a small training data set, which can be recorded in field, in particular using the audio input unit 9 of the hearing device 2 is sufficient for re-training the at least one classifier 15.

The training of at least one classifier can be performed with only few training examples, also called few-shot learning. There exist several few-shot training methods, for instance (a) prototypical networks, which classify a new class based on the distance of a certain distance metric calculated at runtime. The distance is calculated from the embedding at runtime versus the average embedding of N example embeddings (which were added/recorded for the new class). Another example of few-shot learning approaches is (b) dynamic few-shot learning, which uses the average embeddings of N examples and additionally the output of the classifier in the current configuration as an additional input, to generate new classification output. A simple approach for few-shot learning is (c) to fine-tune a smaller model like Logistic Regression or Support Vector machine based on the new N example embeddings.

Additionally, the few training examples can be augmented, in particular by spectral masking, time-frequency warping, pitch-shifting, and the like, and/or extended by artificial data to enhance the robustness of the classification.

Few-shot learning can in particular be carried out based on sample embeddings ES which are calculated from audio signal samples AS which can be recorded in the field. For this purpose, a low number of audio signal samples AS is sufficient. For example, the number of audio signal samples can be between 1 and 1000, in particular between 10 and 1000, in particular between 100 and 1000. In other examples, the number of provided audio signal samples may be below 100, e.g. between 1 and 99, in particular between 10 and 99.

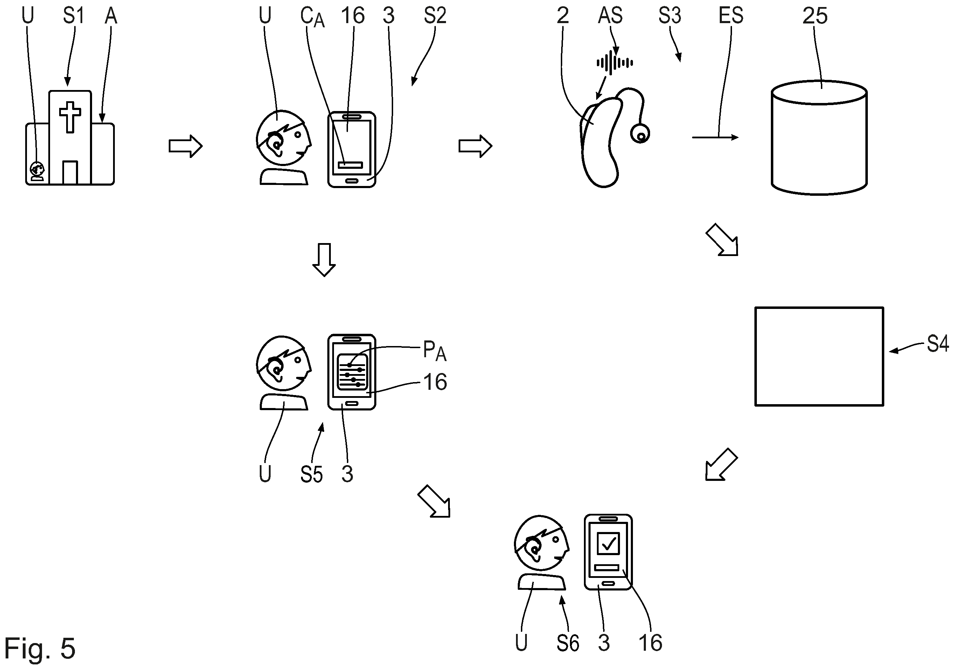

With regard to Fig. 5, a method for customizing, in particular personalizing, the audio signal processing on the hearing device 2 is described. As shown at S1, the user U may be in or enter into a specific acoustic environment A. As exemplary shown in Fig. 5, the specific acoustic environment A may be that of a (specific) church. Of course, the method and the hearing device are not restricted with respect to specific acoustic environments but may be applied to any acoustic environment.

The user U may wish to personalize the audio signal processing on the hearing device, e.g. because he regularly encounters a specific acoustic environment A and/or he is not content with the audio signal processing in that specific acoustic scene A. To this end, the audio signal processing may be customized as starting at S2. The user U initiates the customization. In the shown embodiment, the user U initiates the customization via the user interface 16 of the peripheral 3. For example, the user U may to initiate the customization by creating a new acoustic scene class, e.g. the class "my church". The newly created audio scene class resembles a specific acoustic environment A and is referred to as C_{A} in the following.

After initiation by the user U, the hearing device 2 records one or more audio signal samples AS of the acoustic environment A, as exemplarily shown at step S3 in Fig. 5. Preferably, a medium number between 1 and 1000, e.g. between 100 and 100 or between 1 and 99, of audio signal samples is recorded. The length of each recorded sample may be in the range between 0.1 s and 1000 s, in particular between 0.1 s and 100 s, in particular between 0.1 s and 10 s, in particular between 1 s and 10s.

The recorded one or more audio signal samples AS are provided to the embedding neural network 14. Using the embedding neural network 14 of the hearing device 2, a sample embedding ES is determined for each audio signal sample AS of the acoustic environment A. The sample embeddings ES are stored in an embedding database 25. The embedding database may be stored on a data storage of the hearing device 2 and/or on a data storage 18 of the peripheral device 3. Additionally or alternatively, the embedding database 25 may be stored on the remote device 4. In this regard, the usage of sample embeddings ES is particularly advantageous, as no sensible data is transferred.

The embedding database 25 comprises sample embeddings for each of the acoustic scene classes Cₙ of the set SC. The added sample embeddings ES are associated with the newly created acoustic scene class C_{A}, in the shown embodiment the acoustic scene class "my church". The sample embeddings ES are used to re-train the at least one classifier 15 in a re-training step S4. Re-training may be performed on the hearing device 2, e.g. by the processing device 10, and/or the peripheral device, in particular using the processing unit 19, and/or on the remote device 4. Preferably, re-training is performed externally of the hearing device 2 to profit from the higher computational capabilities of the peripheral device 3 and/or the remote device 4. Re-training preferably uses few-shot training approaches as outlined above.

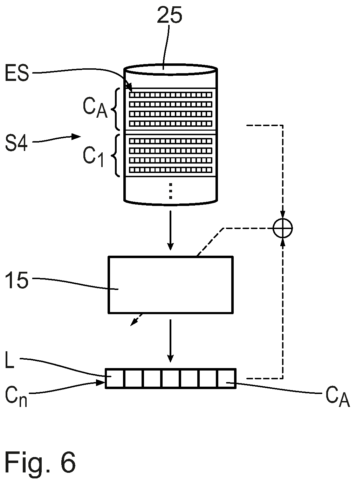

The embedding data storage 25 and the retraining step S4 is described in greater detail with respect to Fig. 6.

As can be seen in Fig. 6, the embedding database 25 comprises several sample embeddings ES for each of the acoustic scene classes. In Fig. 6, sample embeddings ES are exemplary depicted for the acoustic scene classes C1 and the newly created acoustic scene class CA. The sample embeddings ES are associated with the respective acoustic scene class Cₙ.

The sample embeddings ES are used to re-train the at least one classifier 15. In this regard, the associated acoustic scene class Cₙ is used as training label for the respective sample embeddings ES.

Upon re-training, the at least one classifier 15 learns the newly created acoustic scene class C_{A}. The newly created acoustic scene class C_{A} is associated with an output of the at least one classifier 15. For example, the at least one classifier 15 can be supplemented with an additional output. It is also possible that the at least one classifier 15 comprises a fixed number of outputs of which at least one output can be re-associated with the newly created class C_{A}. For example, the at least one classifier may comprise a plurality of outputs which are associated with pre-defined acoustic scene classes Cₙ and a plurality of outputs which can be re-allocated to user-defined acoustic scene classes Cₙ, such as the acoustic scene class C_{A}.

In Fig. 6, dashed arrows schematically indicate the training loop, illustrating the minimization/optimization of the error of the predictions versus the labels in the embedding database 25.

As shown in Fig. 6, the at least one classifier 15 comprises N outputs of which the output N is associated with the newly created acoustic scene class C_{A}. Doing so, the respective output can be used to detect the specific acoustic environment A associated with the acoustic scene class C_{A}. The acoustic scene class C_{A} is added to the set SC of acoustic scene classes Cₙ.

Before, upon and/or after re-training of the at least one classifier 15, plausibility checks can be performed. For example, the re-training may comprise checking whether the previously stored sample embeddings, in particular sample embeddings of a previously added user-defined acoustic scene class, are too similar to the newly created sample embeddings ES of the newly created acoustic scene class C_{A}. For example, the training algorithm may check whether the sample embeddings ES of the newly created acoustic scene class C_{A} are too close to sample embeddings ES of another acoustic scene class Cₙ. If the distance in the embedding space is below a predefined threshold, a warning may be outputted to the user U that the newly to be created acoustic scene class C_{A} may be too similar to an already existing acoustic scene class Cₙ. In this case, it may be particularly advantageous to merge the previously existing acoustic scene class Cₙ with the newly added acoustic scene class C_{A}. In this case, the existing acoustic scene class Cₙ may be refined by associating the additional sample embeddings ES with this acoustic scene class Cₙ and respective re-training of the at least one classifier 15.

Further, the re-training process may check whether the re-training of the at least one classifier 15 may degrade the classification of already existing audio scene classes Cₙ. If this is the case, a warning may be outputted to the use whether he still wishes to add the acoustic scene class C_{A}.

In parallel to re-training of the at least one classifier in step S4, one or more steering parameters P_{A} may be determined and associated with the added acoustic scene class C_{A}. In the embodiment shown in Fig. 5, the user U may determine the one or more steering parameters P_{A} by adjusting respective actuator settings via the user interface 16 of the peripheral device 3 at step S5. The user U can make adjustments to the steering parameters P_{A} until the audio signal processing meets his personal preferences. The so determined steering parameters P_{A} are associated with the added acoustic scene class C_{A}.

In other embodiments, the steering parameters P_{A} may be automatically determined by the hearing system 1 and/or the hearing system 1 may propose suitable steering parameters P_{A} to the user U. For example, the hearing device system 1 may communicate with the remote device 4 on which suitable sets of steering parameters P_{A} are stored. For example, suitable steering parameters P_{A} can be derived from a database of user settings which are associated with acoustic scenes classes Cₙ which have embeddings which are close in the embedding space to the sample embeddings ES.

After determining the at least one steering parameter P_{A} in step S5 and after re-training the at least one classifier 15 in step S4, the customized audio signal processing can be implemented on the hearing device 2. The user U may receive a respective notification, in particular via the user interface 16 of the peripheral device 3, as exemplarily shown at step S6 in Fig. 5. In the following, input audio signals I are processed on the hearing device 2 using the customized audio signal processing. If the user re-encounters the specific acoustic environment A or a similar acoustic environment, the acoustic scene classification unit 12 recognizes the specific acoustic environment A and the audio signal processing to obtain the output audio signal is respectively adapted to the user preferences by using the respective at least one steering parameter P_{A}.

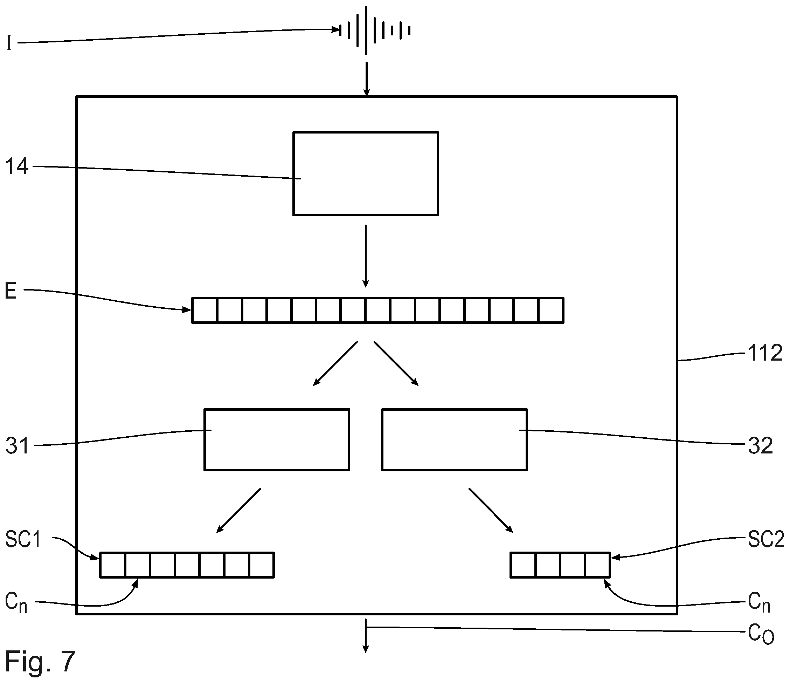

With regard to Fig. 7, a further embodiment of an acoustic scene classification unit 112 is described. The acoustic scene classification unit 112 can be used in the hearing device system 1, in particular in the hearing device 2. The acoustic scene classification unit 112 uses the input audio signal I as an input. The input audio signal I is fed to the embedding neural network 14, which returns the embedding E as described with respect to Fig. 2. The acoustic scene classification unit 112 comprises two classifiers 31, 32 which are run in parallel. That is, the embedding E is provided to both of the classifiers 31, 32. Both classifiers 31, 32 map the embedding E onto respective acoustic scene classes Cₙ.

The classifier 31 is also referred to as default classifier. The default classifier 31 matches the embedding E on pre-defined or default acoustic scene classes Cₙ. The output of the default classifier 31 corresponds to a fixed sub-set SC1 of the set SC of acoustic scene classes Cₙ, which comprises the pre-defined acoustic scene classes.

The classifier 32 is also referred as customized classifier. The customized classifier 32 comprises outputs, which can be associated with personalized acoustic scene classes Cₙ, which can be created upon customization. Thus, the output of the customized classifier 32 corresponds to a second sub-set SC2 of the set SC. The sub-set SC2 contains custom or personalized acoustic scene classes Cₙ of the user U.

Customization of the acoustic scene classification unit 112 can be done as described with respect to Fig. 5 and 6, above. In contrast to the above-described customization, only the customized classifier 32 is subject to re-training. The default classifier 31 is not subject to re-training. This ensures, that the default acoustic scene classes Cₙ of the sub-set SC1 and their classification are not altered, in particular adversely affected by the addition of personalized acoustic scene classes Cₙ. The default classifier 31 as well as the sub-set SC1 of pre-defined acoustic scene classes Cₙ may be used as factory setting to which the audio signal processing of the hearing device 2 can be reset. The acoustic scene classification unit 112 thus provides a high flexibility for customization and a reliable audio signal processing.

## Claims

1. Method for customizing, in particular personalizing, audio signal processing of a hearing device, comprising the steps:
- providing a hearing device (2), wherein the hearing device (2) is configured for audio signal processing of an input audio signal (I) to obtain an output audio signal (O) using
-- an acoustic scene classification unit (12; 112) for classifying the input audio signal (I) to belong to one or more acoustic scene classes (Cₙ), wherein the acoustic scene classification unit (12; 112) comprises
--- an embedding neural network (14) for determining an embedding (E) based on the input audio signal (I), and
--- at least one classifier (15; 31, 32) for mapping the embedding (E) onto the one or more acoustic scene classes (Cₙ), to which the input audio signal (I) belongs, from a set (SC) of acoustic scene classes (Cₙ),
- providing to the embedding neural network (14) at least one audio signal sample (AS) of an acoustic environment (A),
- determining a sample embedding (ES) for each audio signal sample (AS) of the acoustic environment (A) using the embedding neural network (14),
- customizing the audio signal processing of the hearing device (2) by retraining the at least one classifier (15; 32) using the at least one sample embedding (ES), thereby adding an acoustic scene class (C_{A}) for the acoustic environment (A) to the set (SC) of acoustic scene classes (Cₙ).

2. Method according to claim 1, wherein the acoustic scene classification unit (112) comprises at least two classifiers (31, 32), of which at least one classifier (31) is not subject to retraining.

3. Method according to any one of claims 1 or 2, wherein the provision of the one or more audio signal samples (AS) is initiated by a user (U) of the hearing device (2).

4. Method according to any one of claims 1 to 3, wherein the number of provided audio samples (AS) is between 1 and 1000, in particular between 10 and 1000, in particular between 100 and 1000.

5. Method according to any one of claims 1 to 4, wherein one or more steering parameters (P_{A}) for steering the audio signal processing in dependence of the added acoustic scene class (C_{A}) are determined.

6. Method according to any one of claims 1 to 5, wherein retraining of the at least one classifier (15; 32) is executed externally of the hearing device (2).

7. Method according to any one of claims 1 to 6, wherein the determined sample embeddings (ES) are added to an embedding database (25), in which sample embeddings (ES) of each of the audio scene classes (Cₙ) in the set (SC) of audio scene classes (Cₙ) are stored.

8. Method according to any one of claims 1 to 7, wherein the determined sample embeddings (ES) are compared with sample embeddings (ES) of existing acoustic scene classes (Cₙ) prior to retraining the at least one classifier (15; 31, 32).

9. Method according to claim 8, wherein the added acoustic scene class (C_{A}) is merged with an existing acoustic scene class (Cₙ), in particular a previously added acoustic scene class (Cₙ), if a distance of the respective sample embeddings (ES) in the embedding space is below a predefined threshold.

10. Method for customized audio signal processing on a hearing device, having the steps:
- providing a hearing device (2), wherein the hearing device (2) is configured for audio signal processing of an input audio signal (I) to obtain an output audio signal (O) using
-- an acoustic scene classification unit (12; 112) for classifying the input audio signal (I) to belong to one or more acoustic scene classes (Cₙ), and
-- a conversion unit (13) which is configured to obtain the output audio signal (O) from the input audio signal (I) in dependence of the one or more acoustic scene classes (Cₙ),
-- wherein the acoustic scene classification unit (12; 112) comprises
--- an embedding neural network (14) for determining an embedding (E) based on an input audio signal (I), and
--- at least one classifier (15; 31, 32) for mapping the embedding (E) onto the one or more acoustic scene classes (Cₙ), to which the input audio signal (I) belongs, from a set (SC) of acoustic scene classes (Cₙ),
- customizing the audio signal processing of the hearing device (2) as claimed in any one of claims 1 to 9, and
- processing input audio signals (I) by the customized audio signal processing of the hearing device (2).

11. Hearing device, comprising
- an audio input unit (9) for obtaining an input audio signal (I),
- an acoustic scene classification unit (12; 112) for classifying the input audio signal (I) to belong to one or more acoustic scene classes (Cₙ),
- a conversion unit (13) which is configured to obtain the output audio signal (O) from the input audio signal (I) in dependence of the one or more acoustic scene classes (Cn), and
- an audio output unit (11) for outputting the output audio signal (O),
- wherein the acoustic scene classification unit (12; 112) comprises
-- an embedding neural network (14) for determining an embedding (E) based on the input audio signal (I), and
-- at least one classifier (15; 31, 32) for mapping the embedding (E) onto the one or more acoustic scene classes (Cₙ), to which the input audio signal (I) belongs, from a set (SC) of acoustic scene classes (Cₙ).

12. Hearing device according to claim 11, wherein the at least one classifier (15; 31, 32) comprises a plurality of outputs, wherein each output corresponds to one acoustic scene class (Cₙ) and wherein the acoustic scene class (Cₙ) of at least one of the outputs is modifiable based on user preferences.

13. Hearing device according to any one of claims 11 or 12, wherein the acoustic scene classification unit (112) comprises at least two classifiers (31, 32), wherein one of the classifiers (32) is adapted to be re-trained based on user preferences without changing the at least one other classifier (31).

14. Hearing device system, comprising
- a hearing device (2) as claimed in any one of claims 11 to 13,
- a user interface (16) for initiating the provision of one or more audio signal samples (AS) and/or for receiving one or more steering parameters (P_{A}).

15. Hearing device system according to 14, wherein the hearing device system (1) comprises an embedding database (25), in which sample embeddings (ES) of each of the audio scene classes (Cₙ) in the set (SC) of audio scene classes (Cₙ) are stored.
